# EUROPÄISCHE PATENTANMELDUNG

(11) **EP 3 056 795 A1**
(43) Veröffentlichungstag der Anmeldung: **17.08.2016**
(21) Anmeldenummer: 15155187.6
(22) Anmeldetag: 16.02.2015
(51) Int. Cl.: F17C 13/02

(54) **Vorrichtung zur Aufnahme eines Kryofluids**

(71) Anmelder: SALZBURGER ALUMINIUM AKTIENGESELLSCHAFT, 5651 Lend (AT)
(72) Erfinder: Lind, Christoph, 5671 Bruck (AT)
(74) Vertreter: Weiser, Andreas

(57) **Zusammenfassung**

Vorrichtung (1) zur Aufnahme eines Kryofluids, umfassend einen Druckbehälter (2) mit einem darin angeordneten Wärmetauscher (7), durch den ein Wärmeträgermedium über Anschlussleitungen (10, 11) hindurchführbar ist, welche die Wandung des Druckbehälters (2) durchsetzen, wobei der Druckbehälter (2) aus einem allgemein-zylindrischen Mantel (3) und zwei mit diesem druckdicht verschweißten Endkappen (5, 6) aufgebaut ist, der Wärmetauscher (7) nur an einer Endkappe (5) fest montiert ist und von dieser ausgehend in das vom Mantel (3) umschlossene Volumen ragt, und die Anschlussleitungen (10, 11) die vorgenannte Endkappe (5) durchsetzen.

## Beschreibung

Die vorliegende Erfindung betrifft eine Vorrichtung zur Aufnahme eines Kryofluids, umfassend einen Druckbehälter mit einem darin angeordneten Wärmetauscher, durch den ein Wärmeträgermedium über Anschlussleitungen hindurchführbar ist, welche die Wandung des Druckbehälters durchsetzen.

Um den Energiegehalt von Energieträgern, welche unter Normalbedingungen gasförmig sind, zu erhöhen, werden diese für Transport- und Lagerungszwecke entweder komprimiert und in Druckbehältern gespeichert oder auf Tieftemperatur abgekühlt und dabei zu einem Kryofluid zumindest teilverflüssigt und in temperaturisolierten Behältern gespeichert. Zum Antrieb von Fahrzeugen werden z.B. verflüssigtes Erdgas (liquefied natural gas, LNG) oder verflüssigter Wasserstoff als Kryofluide mit hoher Energiedichte gespeichert, um hinterher zum Betrieb von im wesentlichen herkömmlichen Verbrennungskraftmaschinen oder Brennstoffzellen der Fahrzeuge genutzt zu werden.

Mittels eines Wärmetauschers im Inneren des Druckbehälters kann die Temperatur und somit der Druck erhöht werden, um diesen im Inneren des Druckbehälters zu regulieren. Eine solche Vorrichtung ist aus der US 6 634 178 B1 bekannt. Die Fertigung des dort gezeigten Druckbehälters ist jedoch äußerst aufwändig, da der dort gezeigte Wärmetauscher die Wandung des Druckbehälters direkt durchsetzt.

Die Erfindung setzt sich zum Ziel, die Nachteile des Standes der Technik zu überwinden und eine Vorrichtung zur Aufnahme eines Kryofluids zu schaffen, die einfach und kostengünstig zu fertigen ist.

Dieses Ziel wird gemäß der Erfindung mit einer Vorrichtung der einleitend genannten Art erreicht, die sich durch die Kombination der Merkmale auszeichnet,
dass der Druckbehälter in an sich bekannter Weise aus einem allgemein-zylindrischem Mantel und zwei mit diesem druckdicht verschweißten Endkappen aufgebaut ist;
dass der Wärmetauscher nur an einer Endkappe montiert ist und von dieser ausgehend in das vom Mantel umschlossene Volumen ragt; und
dass die Anschlussleitungen die vorgenannte Endkappe durchsetzen.

Die Erfindung schafft einen Druckbehälter mit Wärmetauscher, der besonders einfach gefertigt werden kann: Der Wärmetauscher kann an der Endkappe zusammen mit dieser als eine Baugruppe vormontiert werden, bevor der Mantel an die Endkappe angeschweißt wird. Ein Eingreifen in die Mantelherstellung oder die herkömmlichen Verschweißschritte des Mantels mit der Endkappe ist nicht erforderlich, auch eine Montage des Wärmetauschers am Mantel erübrigt sich.

In einer bevorzugten Ausführungsform umfasst die Endkappe ein Anschlusselement, durch welches die Anschlussleitungen die vorgenannte Endkappe durchsetzen. Dies hat den Vorteil, dass die Anschlussleitungen nicht durch die Wandung des Druckbehälters hindurchgeführt und danach z.B. mit dieser verschweißt werden müssen. Das Anschlusselement, das gleichzeitig auch als Festlager bzw. Auflager zwischen dem Druckbehälter und isolierendem Außenbehälter dienen kann, wie später noch näher erläutert, kann dabei als direkter Anschluss für die Anschlussleitungen oder als Durchführungs- oder Kupplungselement für diese ausgebildet sein.

Besonders bevorzugt umfasst in dieser Ausführungsform die Vorrichtung eine Füllleitung, eine Entnahmeleitung und/oder eine Ventleitung für den Druckbehälter, die das Anschlusselement durchsetzen. Das Anschlusselement kombiniert die Anschlussmöglichkeiten für alle Leitungen der Vorrichtung bzw. ist eine zentrale Sammelstelle für diese, so dass keine zusätzlichen Durchführungen durch die Endkappe und/oder den Mantel erforderlich sind, was die Fertigung und Montage weiter vereinfacht.

In einer Ausführungsform ist der Wärmetauscher direkt an der Innenseite der genannten Endkappe und/oder an deren Anschlusselement montiert. Bevorzugt ist jedoch an der Endkappe, z.B. direkt an deren Innenseite oder Anschlusselement, eine in das vom Mantel umschlossene Volumen ragende Stützeinrichtung montiert, besonders bevorzugt geklemmt, geschweißt oder geschraubt, die den Wärmetauscher trägt. Durch die zusätzliche Stützeinrichtung ist es möglich, den Wärmetauscher im Inneren des Druckbehälters zu stabilisieren. Da die Stützeinrichtung nur an der Endkappe montiert ist, ist es wiederum möglich, die Endkappe samt Wärmetauscher vollständig zusammenzubauen, bevor der Mantel an diese angeschweißt wird. Ferner hat die Stützeinrichtung den Vorteil, dass an ihr beispielsweise die Füllleitung, Entnahmeleitung und/oder Ventleitung oder weitere Komponenten im Inneren des Druckbehälters, z.B. ein Füllstandssensor, abgestützt werden können.

Besonders vorteilhaft ist es, wenn die Stützeinrichtung einen die Endkappe in einem Randbereich überspannenden Steg mit davon auskragenden Armen aufweist, welche den Wärmetauscher tragen. Der die Endkappe überspannende Steg bildet eine teilweise Schwallwand im Bereich des Wärmetauschers, wodurch dieser bei abrupten Bewegungen der Vorrichtung besser geschützt ist. Die Arme haben den Vorteil, dass der Wärmetauscher in einem unteren Bereichs des eingebauten Druckbehälters von oben getragen werden kann.

Der Wärmetauscher kann beliebiger Art und Form sein. Bevorzugt umfasst der Wärmetauscher ein mäanderförmig durch einen unteren Bereich des Druckbehälters geführtes Rohr. Ein solcher Wärmetauscher kann kostengünstig hergestellt werden und sich dabei auch nur im untersten Bereich des Druckbehälters befinden. Dies hat den Vorteil, dass der Inhalt des Druckbehälters selbst bei geringer Befüllung erwärmt werden kann.

Besonders bevorzugt verläuft in dieser Ausführungsform das genannte Rohr - von sichelförmigen Halteschienen gehalten - mäanderförmig in einer gekrümmten Ebene, welche der Innenseite des Mantels folgt. Dies ermöglicht sowohl eine Anpassung der Wärmetauscherform an die Form des Mantels als auch eine Stabilisierung des Wärmetauschers mittels der Halteschienen. Die Halteschienen können gemäß einem weiteren bevorzugten Merkmal der Erfindung mit den Tragarmen der Stützeinrichtung einfach zusammengesteckt werden, was die Fertigung erleichtert.

Der Wärmetauscher kann an sich von beliebigen Wärmetauschmedien durchlaufen werden. In einer besonders bevorzugten Ausführungsform ist ein weiterer Wärmetauscher an der nach außen gewandten Seite der Endkappe gelagert, über welchen von der Vorrichtung entnommenes Kryofluid erwärmbar ist, welches dem im Druckbehälter angeordneten Wärmetauscher über das Anschlusselement zuführbar ist. Dies ist besonders dann von Vorteil, wenn der weitere Wärmetauscher direkt an der Vorrichtung angebracht ist, da dann die Leitungslängen zwischen den Wärmetauschern besonders klein sind.

In einer weiteren Variante der erfindungsgemäßen Vorrichtung ist der Druckbehälter in einen isolierenden Außenbehälter eingesetzt, wobei das Anschlusselement als starre Verbindung zwischen Druckbehälter und Außenbehälter dient. Der isolierende Außenbehälter kann entweder in einem Abstand vom Druckbehälter angeordnet sein, wobei im Zwischenraum zwischen Druckbehälter und Außenbehälter Vakuum oder ein Isoliermittel eingeschlossen ist, oder bereits mit einer isolierenden Innenschicht ausgestattet sein, die direkt am Druckbehälter anliegt. In dieser Variante erfüllt das Anschlusselement eine Doppelfunktion, da es sowohl einen Anschluss bzw. eine Durchführung für die Leitungen zwischen dem Innen- und dem Außenbereich des Druckbehälters darstellt als auch den Druckbehälter im Inneren des Außenbehälters fixiert. Bevorzugt liegt dabei an der dem Anschlusselement entgegengesetzten Seite des Druckbehälters ein Loslager zur Aufnahme von thermischen Spannungen zwischen Druckbehälter und Außenbehälter.

Die Erfindung wird nachfolgend anhand von in den beigeschlossenen Zeichnungen dargestellten Ausführungsbeispielen näher erläutert. In den Zeichnungen zeigen:
Fig. 1 ein Schaltbild der erfindungsgemäßen Vorrichtung und daran angeschlossener weiterer Komponenten;
Fig. 2 eine der Endkappen des Druckbehälters der Vorrichtung von Fig. 1 mit daran montierten Komponenten in einer teilweise aufgebrochenen Perspektivansicht; und
   die Fig. 3a - 3d den schrittweisen Aufbau der Vorrichtung der Fig. 1 und 2 in aufeinanderfolgenden Schnittansichten.

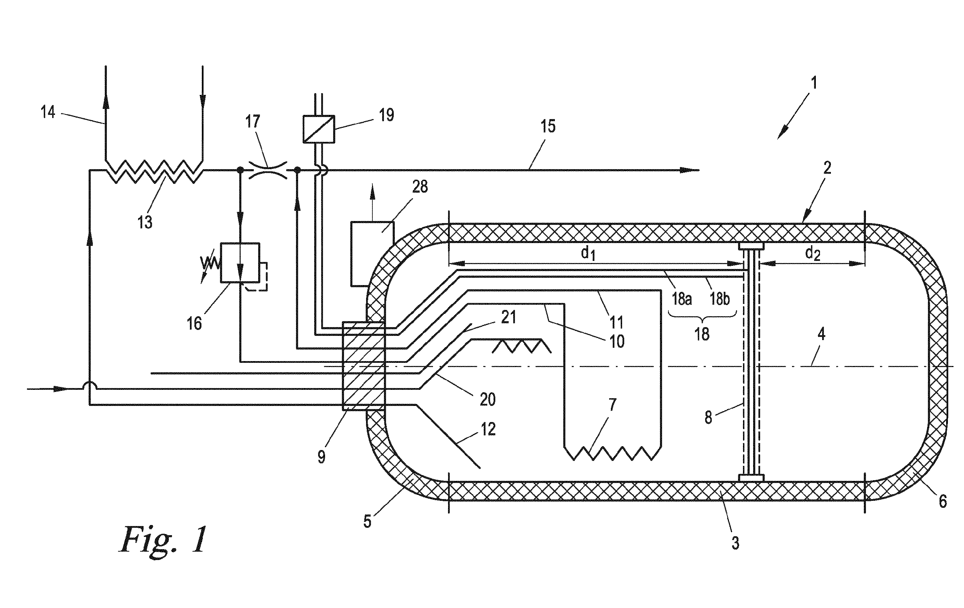

Fig. 1 zeigt eine Vorrichtung 1 mit einem Druckbehälter 2 zur Aufnahme eines Kryofluids. Der Druckbehälter 2 umfasst einen allgemein-zylindrischen Mantel 3 mit einer Zylinderachse 4 sowie zwei Endkappen 5, 6 und ist beispielsweise aus Metall, insbesondere Stahl oder Aluminium, gefertigt. Unter dem Begriff "allgemein-zylindrisch" wird ein Zylinder mit einer beliebigen Grund- bzw. Querschnittsflache verstanden, sei sie kreisrund, oval, rechteckig, quadratisch oder quadratisch mit abgerundeten Ecken oder sonstwie geformt.

Das Kryofluid kann beispielsweise Erdgas sein, das bei Temperaturen von bis zu -161°C und einem Druck von bis zu 16 bar zumindest teilweise verflüssigt vorliegt (liquefied natural gas, LNG), oder ein vergleichbares, in Verbrennungskraftmaschinen oder Brennstoffzellen einsetzbares Kryofluid, z.B. verflüssigter Wasserstoff. Die Vorrichtung 1 wird beispielsweise in der Art eines herkömmlichen Kraftstoffbehälters seitlich am Chassis bzw. Rahmen eines nicht weiter dargestellten Nutzfahrzeugs, z.B. eines Lastkraftwagens (LKWs) oder Personenkraftwagens (PKWs), montiert.

Das Kryofluid kann aber auch ein Kältemittel sein, beispielsweise Flüssigstickstoff, mit dem das Kühlsystem von Kühllastern betrieben wird, z.B. von Lebensmitteltransportern. Demgemäß kann die Vorrichtung 1 auch für die Speicherung solcher Kältemittel auf LKWs oder LKW-Anhängern verwendet werden.

Wird die Vorrichtung 1 als Kraftstofftank verwendet, kann es bei hohem Kraftstoffverbrauch, z.B. beim Bergauffahren, zu einer solch hohen Kraftstoffentnahmrate kommen, dass der Druck im Druckbehälter 2 rapide sinkt und für den Fahrzeugbetrieb nicht mehr ausreicht. Um in solchen Fällen die Temperatur und damit den Druck im Inneren des Druckbehälters 2 zu erhöhen, befindet sich ein Wärmetauscher 7 im Inneren des Druckbehälters 2. Weiters ist ein Füllstandssensor 8 im Inneren des Druckbehälters 2 angeordnet, um den Füllstand zu messen.

Die Endkappe 5 ist mit einem Anschlusselement 9 ausgestattet, z.B. einem Flansch oder einem Anschlussstutzen. An bzw. durch das Anschlusselement 9 sind Anschlussleitungen 10, 11 des Wärmetauschers 7 angeschlossen bzw. hindurchgeführt.

Das Anschlusselement 9 ist ferner von einer Entnahmeleitung 12 durchsetzt, über welche dem Druckbehälter 2 Kryofluid entnommen werden kann. Das entnommene Kryofluid kann z.B. durch einen weiteren Wärmetauscher 13, der sich außerhalb des Druckbehälters 2 befindet und von einem Abwärmekreis 14 eines Fahrzeugmotors (nicht dargestellt) beheizt wird, erwärmt und dann dem Fahrzeugmotor über eine Leitung 15 zugeführt werden.

Der Wärmetauscher 7 im Inneren des Druckbehälters 2 kann im vorgenannten Anwendungsfall direkt mit dem vom Wärmetauscher 13 erwärmten Kryofluid gespeist werden, indem ein Teil des Kryofluids aus der Leitung 15 ausgekoppelt und dem Wärmetauscher 7 über die Anschlussleitung 10 zugeführt wird. Die Regelung des Aufteilungsverhältnisses kann dabei mittels eines Druckregelventils 16 in der Anschlussleitung 10 und einer Drossel 17 in der Ausgangsleitung 15 durchgeführt werden. Es versteht sich jedoch, dass dem Wärmetauscher 7 auch andere Wärmetauschmedien zugeführt werden könnten.

Der Füllstandssensor 8 ist über das Anschlusselement 9 durchsetzende Leitungen 18a, 18b (zusammen: 18) mit einer Schnittstelle 19 für eine Auswerteeinrichtung verbunden, um beispielsweise eine kapazitive Messung des Füllstands im Inneren des Druckbehälters 2 zu ermöglichen.

Das Anschlusselement 9 ist weiters von einer Befüllleitung 20 zur Befüllung des Druckbehälters 2 mit Kryofluid und einer Vent-Leitung 21 zur Entgasung des Druckbehälters 2 bei Überdruck durchsetzt.

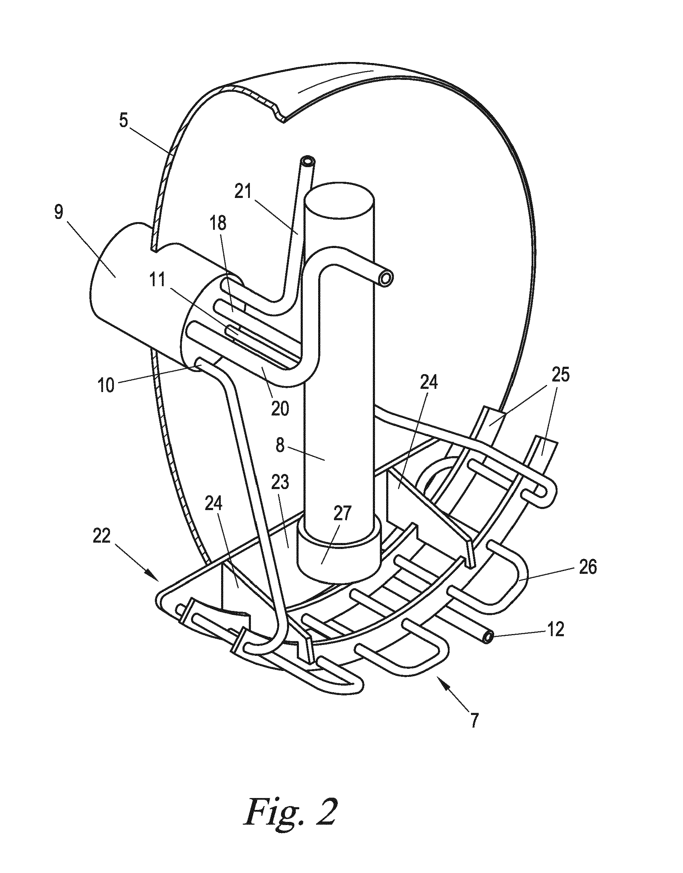

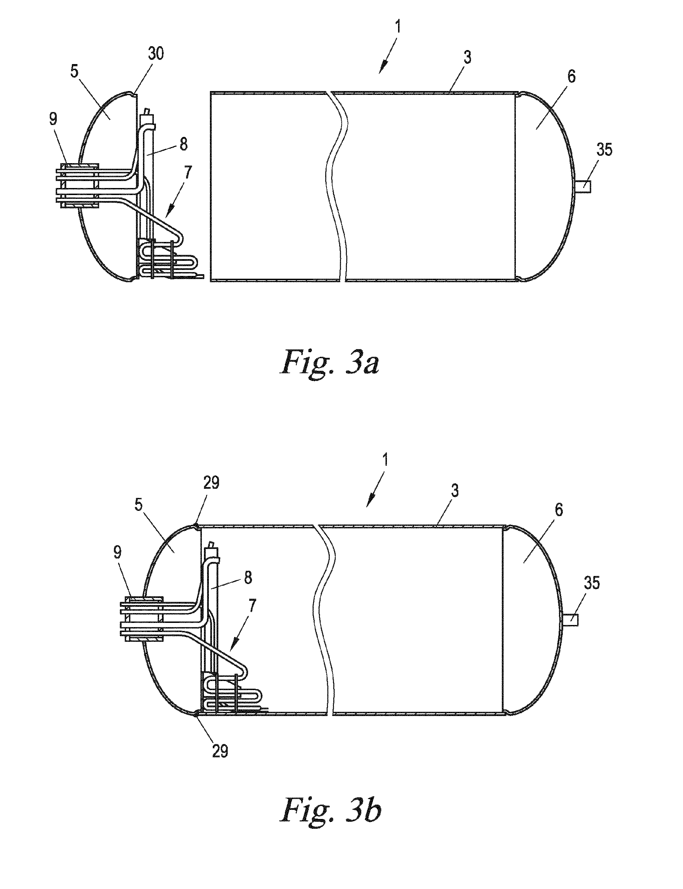

Fig. 2 zeigt die Anordnung des Wärmetauschers 7, des Füllstandssensors 8 und der zugehörigen Leitungen 10, 11, 12, 18, 20, 21 an der Endkappe 5 und deren Anschlusselement 9 im Detail. Der Wärmetauscher 7 ist nur an der Endkappe 5, z.B. an deren Anschlusselement 9 und/oder wie hier gezeigt direkt an deren Innenseite, fest montiert, z.B. angeschweißt oder angeschraubt, und ragt davon ausgehend in das vom Mantel 3 umschlossene Volumen des Druckbehälters 2 (Fig. 3a - 3d). Der Füllstandssensor 8 ist im Wesentlichen stabförmig, z.B. als zylindrischer Kondensator oder einfach durch zwei voneinander beabstandete längliche elektrische Kondensatorplatten oder -profile ausgebildet, liegt normal zur Zylinderachse 4 des Mantels 3 und ist ebenfalls nur an der Endkappe 5, z.B. deren Innenseite und/oder Anschlusselement 9, montiert, z.B. angeschweißt oder angeschraubt.

In der in Fig. 2 gezeigten Ausführungsform ist eine in das vom Mantel 3 umschlossene Volumen ragende Stützeinrichtung 22 an der Endkappe 5 montiert, z.B. angeschweißt oder angeschraubt, die den Wärmetauscher 7, den Füllstandssensor 8, die Entnahmeleitung 12, die Füllleitung 20 und/oder die Ventleitung 21 trägt, um diese zu stabilisieren. Die Stützeinrichtung 22 kann dabei an der Innenseite der Endkappe 5 und/oder deren Anschlusselement 9 befestigt oder sogar mit letzterem einstückig ausgebildet sein.

Die Stützeinrichtung 22 weist im gezeigten Beispiel einen Steg 23, der die Endkappe 5 in einem Randbereich überspannt, und vom Steg 23 auskragende Arme 24 auf, die den Wärmetauscher 7 tragen, z.B. mittels zweier oder mehrerer sichelförmiger Halteschienen 25. Die Halteschienen 25 sind in der in Fig. 2 gezeigten Ausführungsform wiederum in die Arme 24 gesteckt, könnten jedoch auch einstückig gefertigt oder zusammengeschweißt sein.

Der Wärmetauscher 7 kann jeglicher Art und Ausgestaltung sein, z.B. ein Rohrbündelwärmetauscher oder ein Spiralwärmetauscher. In der in Fig. 2 gezeigten Ausführungsform umfasst der Wärmetauscher 7 ein mäanderförmig durch einen unteren Bereich des Druckbehälters 2 geführtes Rohr 26.

Das Rohr 26 wird z.B. direkt von den sichelförmigen Halteschienen 25 gehalten und verläuft mäanderförmig in einer gekrümmten Ebene, welche der Innenseite des Mantels 3 folgt. Dadurch ist die Form des Wärmetauschers 7 der Mantelform, insbesondere einem Bodenabschnitt des Mantels 3, angepasst. Wenn somit nur wenig Kryofluid im Druckbehälter 2 vorhanden ist, kann auch dies effizient erwärmt werden bzw. kommt es bei einem vollen Druckbehälter 2 zu einer gleichmäßigen Erwärmung durch Konvektion.

Der Füllstandssensor 8 kann auf beliebige Arten an der Endkappe 5 montiert werden. In der gezeigten Ausführungsform ist der Füllstandssensor 8 mittels eines Stutzens 27, der beispielsweise am Steg 23 angeschweißt oder einstückig mit diesem ausgebildet ist, an der Endkappe 5 gelagert. Der Füllstandssensor 8 ist beispielsweise stab- oder zylinderförmig ausgebildet und kann so in den Stutzen 27 eingesteckt oder eingeschraubt werden. Alternativ könnte der Füllstandssensor 8 eine Montageeinrichtung umfassen, beispielsweise eine Halteklemme, die mit dem Steg 23, den Armen 24 und/oder dem Anschlusselement 9 verbunden, z.B. daran angesteckt, werden kann. Um einen möglichst großen Messbereich zu umfassen, überspannt der Füllstandssensor 8 die Endkappe 5 etwa mittig, d.h. er befindet sich im Wesentlichen vor dieser und ist etwa so lang wie der Durchmesser der Endkappe 5.

Durch die Montage des Füllstandssensors 8 nur an der Endkappe 5 befindet sich dieser im Allgemeinen nicht mehr in der Mitte der Längserstreckung des Druckbehälters 2, wie im Stand der Technik üblich, sondern weist unterschiedliche Abstände d₁, d₂ zu den Endkappen 5, 6 auf, siehe Fig. 1. Um Messungenauigkeiten beim Verkippen des Druckbehälters 2 auszugleichen, kann die Vorrichtung 1 daher optional auch einen Neigungssensor 28 (Fig. 1) umfassen, welcher beispielsweise vom Füllstandssensor 8, von der Stützeinrichtung 22 oder direkt von der Endkappe 5 getragen wird oder irgendwo am Druckbehälter 2 angeordnet ist und jedenfalls in starrer Winkelbeziehung mit dem Füllstandssensor 8 steht. Die Füllstandsmessdaten, die an der Schnittstelle 19 ausgegeben werden, können so korrigiert werden bzw. bereits korrigiert ausgegeben werden.

Die Fig. 3a - 3d zeigen den Zusammenbau der Vorrichtung 1. Gemäß Fig. 3a werden zuerst der Wärmetauscher 7 und der Füllstandssensor 8 mittels der Stützeinrichtung 22 an der Endkappe 5, z.B. deren Innenseite und/oder Anschlusselement 9, montiert, wobei die Leitungen 10, 11, 12, 18, 20, 21 durch das Anschlusselement 9 hindurchgeführt bzw. an dieses angeschlossen werden.

Danach wird die Endkappe 5 mit einer umlaufenden Schweißnaht 29 an den Mantel 3 angeschweißt (in Fig. 3b nur schematisch gezeigt), wobei die Endkappe 5 zu diesem Zweck mit einem Schweißsteg 30 ausgestattet sein kann. Vor oder nach dem Anschweißen der Endkappe 5 kann die dieser gegenüberliegende Endkappe 6 an den Mantel 3 angeschweißt werden, oder die Endkappe 6 und der Mantel 3 sind einstückig ausgebildet. Der Mantel 3, zusammen mit den zwei druckdicht angeschweißten Endkappen 5, 6, bildet nun den Druckbehälter 2.

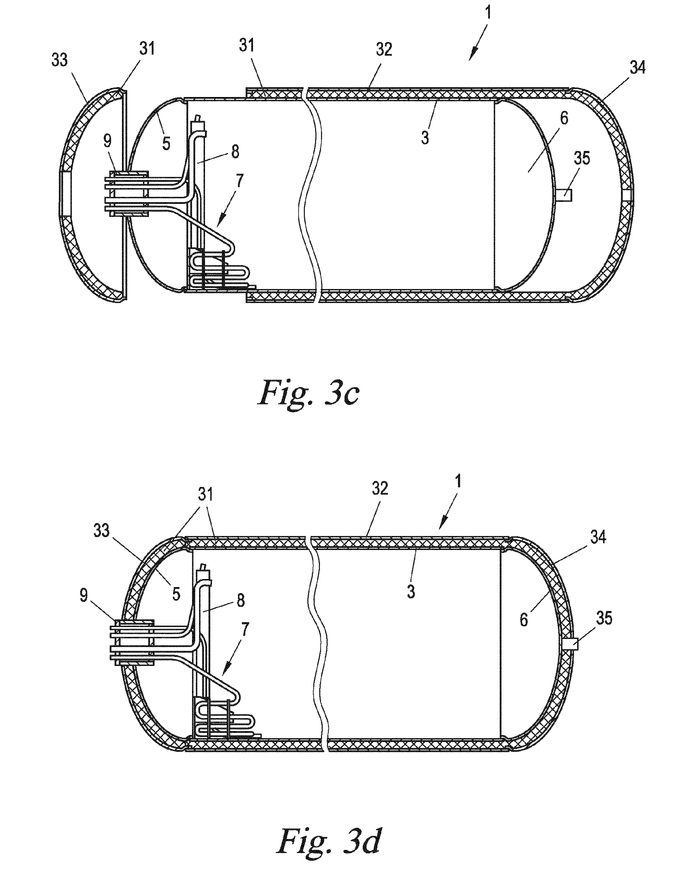

Die Fig. 3c und 3d zeigen das optionale Anbringen eines thermisch isolierenden Außenbehälters (Isolierbehälters) 31 am Druckbehälter 2. Der Außenbehälter 31 ist aus gleichem oder unterschiedlichem Material wie der Druckbehälter 2 gefertigt, beispielsweise aus Metall, insbesondere Stahl oder Aluminium, oder Kunststoff. Der Außenbehälter 33 kann mit einer isolierenden Innenschicht, z.B. einer Schaumstoffschicht, ausgestattet sein, die am Druckbehälter 2 anliegt. Alternativ kann der Außenbehälter 31 auch einen Abstand vom Druckbehälter 2 einhalten, wobei im Zwischenraum zwischen Außenbehälter 31 und Druckbehälter 2 Vakuum oder ein Isoliermittel eingeschlossen sein kann. Das Anschlusselement 9 dient hier auch als starre Verbindung (Festlager) zwischen Druckbehälter 2 und Außenbehälter 31, um diese beiden Elemente als starre Einheit zu verbinden.

Der Außenbehälter 31 kann ferner - ähnlich wie der Druckbehälter 2 - aus einem zentralen Außenmantel 32 und zwei endseitigen Stirnkappen 33, 34 zusammengesetzt sein. Die Montage des Außenbehälters 31 am Druckbehälter 2 kann dabei beliebig erfolgen, beispielsweise wird erst die Endkappe 32 am Anschlusselement 9 angebracht (z.B. verschweißt oder verschraubt), und danach der Außenmantel 32 mit eventuell zuvor angeschweißter Endkappe 34 an die Endkappe 33 angeschweißt. Alternativ kann die Endkappe 33 auch erst nach dem Verschweißen am Anschlusselement 9 fixiert werden.

Da der Druckbehälter 2 und der Außenbehälter 31 unterschiedlichen thermischen Ausdehnungen unterliegen, kann zwischen der dem Anschlusselement 9 gegenüberliegenden Endkappe 6 des Druckbehälters 2 und der Stirnkappe 34 des Außenbehälters 31 ein - hier nur schematisch dargestelltes - Axial- bzw. Loslager 35 zur Aufnahme von in Richtung der Achse 4 auftretenden thermischen Spannungen zwischen Druckbehälter 2 und Außenbehälter 31 angeordnet sein.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Vorrichtung zur Aufnahme eines Kryofluids, umfassend einen Druckbehälter (2) mit einem darin angeordneten Wärmetauscher (7), durch den ein Wärmeträgermedium über Anschlussleitungen (10, 11) hindurchführbar ist, welche die Wandung des Druckbehälters (2) durchsetzen,
**gekennzeichnet durch** die Kombination der Merkmale
dass der Druckbehälter (2) in an sich bekannter Weise aus einem allgemein-zylindrischen Mantel (3) und zwei mit diesem druckdicht verschweißten Endkappen (5, 6) aufgebaut ist,
dass der Wärmetauscher (7) nur an einer Endkappe (5) fest montiert ist und von dieser ausgehend in das vom Mantel (3) umschlossene Volumen ragt, und
dass die Anschlussleitungen (10, 11) die vorgenannte Endkappe (5) durchsetzen.

2. Vorrichtung nach Anspruch 1, **dadurch gekennzeichnet, dass** die genannte Endkappe (5) ein Anschlusselement (9) umfasst, durch welches die Anschlussleitungen (10, 11) die vorgenannte Endkappe (5) durchsetzen.

3. Vorrichtung nach Anspruch 2, **dadurch gekennzeichnet, dass** die Vorrichtung eine Füllleitung (20), eine Entnahmeleitung (12) und/oder eine Ventleitung (21) für den Druckbehälter (2) umfasst, die das Anschlusselement (9) durchsetzt bzw. durchsetzen.

4. Vorrichtung nach einem der Ansprüche 1 bis 3, **dadurch gekennzeichnet, dass** an der Endkappe (5) eine in das vom Mantel (3) umschlossene Volumen ragende Stützeinrichtung (22) montiert ist, bevorzugt geklemmt, geschweißt oder geschraubt, die den Wärmetauscher (7) trägt.

5. Vorrichtung nach Anspruch 4, **dadurch gekennzeichnet, dass** die Stützeinrichtung (22) einen die Endkappe (5) in einem Randbereich überspannenden Steg (23) mit davon auskragenden Armen (24) aufweist, welche den Wärmetauscher (7) tragen.

6. Vorrichtung nach einem der Ansprüche 1 bis 6, **dadurch gekennzeichnet, dass** der Wärmetauscher (7) ein mäanderförmig durch einen unteren Bereich des Druckbehälters (2) geführtes Rohr (26) umfasst.

7. Vorrichtung nach Anspruch 6, **dadurch gekennzeichnet, dass** das Rohr von sichelförmigen Halteschienen (25) gehalten mäanderförmig in einer gekrümmten Ebene verläuft, welche der Innenseite des Mantels (3) folgt.

8. Vorrichtung nach den Ansprüchen 5 und 7, **dadurch gekennzeichnet, dass** die Halteschienen (25) mit den Tragarmen (24) zusammengesteckt sind.

9. Vorrichtung nach einem der Ansprüche 1 bis 8, **dadurch gekennzeichnet, dass** ein weiterer Wärmetauscher (7) an der nach außen gewandten Seite der Endkappe (5) gelagert ist, über welchen von der Vorrichtung (1) entnommenes Kryofluid erwärmbar ist, welches dem im Druckbehälter (2) angeordneten Wärmetauscher (7) über das Anschlusselement (9) zuführbar ist.

10. Vorrichtung nach einem der Ansprüche 1 bis 9, **dadurch gekennzeichnet, dass** die Stützeinrichtung (22) ferner einen Füllstandssensor (8) trägt.

11. Vorrichtung nach einem der Ansprüche 1 bis 10, **dadurch gekennzeichnet, dass** der Druckbehälter (2) in einen isolierenden Außenbehälter (31) eingesetzt ist, wobei das Anschlusselement (9) als starre Verbindung zwischen Druckbehälter (2) und Außenbehälter (31) dient.

12. Vorrichtung nach Anspruch 11, **dadurch gekennzeichnet, dass** an der dem Anschlusselement (9) entgegengesetzten Seite des Druckbehälters (2) ein Loslager (35) zur Aufnahme von thermischen Spannungen zwischen Druckbehälter (2) und Außenbehälter (31) liegt.
